# EUROPÄISCHE PATENTSCHRIFT

(11) **EP 1 579 108 B1**
(45) Veröffentlichungstag und Bekanntmachung des Hinweises auf die Patenterteilung: **19.12.2007**
(21) Anmeldenummer: 03740104.9
(22) Anmeldetag: 24.06.2003
(51) Int. Cl.: F01L 9/02, F02D 13/02

(54) **VERFAHREN UND STEUEREINRICHTUNG ZUM ANSTEUERN VON GASWECHSELVENTILEN ZUGEORDNETEN MAGNETVENTILEN**
METHOD AND CONTROL UNIT FOR CONTROLLING SOLENOID VALVES PROVIDED FOR GAS EXCHANGE VALVES
PROCEDE ET DISPOSITIF DE COMMANDE DE SOUPAPES MAGNETIQUES AFFECTEES A DES SOUPAPES D'ECHANGE GAZEUX

(30) Priorität: 24.12.2002 DE 10261022
(43) Veröffentlichungstag der Anmeldung: 28.09.2005
(73) Patentinhaber: ROBERT BOSCH GMBH, 70442 Stuttgart (DE)
(72) Erfinder: JAROS, Rolf, 71522 Backnang (DE); SCHWEIGGART, Hubert, 70191 Stuttgart (DE); PISCHKE, Ulf, 70563 Stuttgart (DE); GAESSLER, Hermann, 71665 Vaihingen (DE)
(86) Internationale Anmeldenummer: PCT/DE2003/002089
(87) Internationale Veröffentlichungsnummer: WO 2004/061275

(56) Entgegenhaltungen:
- US-A- 4 009 695
- US-A- 5 115 782
- US-A- 5 201 296

## Beschreibung

Die vorliegende Erfindung betrifft ein Verfahren und eine Vorrichtung zum Ansteuern von Gaswechselventilen zugeordneten Magnetventilen.

Es ist bekannt bei Brennkraftmaschinen den herkömmlichen Ventiltrieb mit Nockenwellen durch eine elektrohydraulische Ventilbetätigung zu ersetzten. Bei einer solchen elektrohydraulischen Ventilbetätigung sind den Gaswechselventilen Magnetventile zugeordnet, die den Zu- und Abfluss einer druckbeaufschlagten Flüssigkeit, eines Hydrauliköls, in die Arbeitskammer eines hydraulischen Arbeitszylinders steuern. Über die Füllung der Arbeitskammer des hydraulischen Arbeitszylinders wird die Stellung des entsprechenden Gaswechselventils verändert.

Der Vorteil einer solchen elektrohydraulischen Ventilsteuerung ist darin zu sehen, dass das Betätigen der einzelnen Gaswechselventile der Brennkraftmaschine unabhängig voneinander erfolgen kann. Hierdurch wird eine große Variabilität in den Öffnungs- und Schließzeitpunkten der Gaswechselventile erreicht. Dabei ist die Variabilität sowohl zwischen den Gaswechselventilen unterschiedlicher Brennkammern untereinander als auch zwischen den Gaswechselventilen einer Brennkammer gegeben. Durch entsprechende Abstimmung der Betätigung der Magnetventile ist es beispielsweise möglich die Ventilbetätigung zweier Gaswechselventile gleicher Funktion, also zweier Einlassventile oder zweier Auslassventile, zu synchronisieren und dabei alle vorhandenen Bauteiltoleranzen und systemimmanenten Abweichungen im Gleichlauf auszugleichen.

Daher ist es von elektrohydraulischen Ventilbetätigungen bekannt, in einem Steuergerät zeitsynchron zu der Kurbelwellenbewegung und ggf. abhängig vom Fahrzustand des Fahrzeugs, den Betriebszuständen der Brennkraftmaschine sowie abhängig von Fahrervorgaben für jedes einzelne Magnetventil ein Ansteuersignal zu ermitteln, über eine entsprechende Ansteuerleitung dieses Signal an eine Endstufe zu übermitteln. Aufgrund des Betätigungssignals wird dann das entsprechende Magnetventil mittels der Endstufe angesteuert.

Dies setzt voraus, dass zwischen dem Steuergerät und der Endstufe für jedes Magnetventil eine gesonderte Steuerleitung vorgesehen ist. Dies führt zu einem großen Verkabelungsaufwand und zu einem entsprechend großen Aufwand an Rechenleistung im Steuergerät. Jedes Betätigungssignal des Steuergeräts muss kurbelwellensynchron ermittelt und erzeugt werden.

Aus der US 4,009,695 ist beispielsweise ein programmierbares Ventilsystem für eine Brennkraftmaschine bekannt, bei dem über Magnetventile Gaswechselventile elektrohydraulisch betätigt werden. Das Öffnen und Schließen der Gaswechselventile sowie die Zündung erfolgt über so genannte Computer. Hierbei werden die Funktionen Einlassventilöffnen, -schließen, Auslassventilöffnen, -schließen und Zündung durch jeweils einen eigenen Computer zusammengefasst. Ein jeder Computer wird über eine elektronische Nockenwelle mit kurbelwellensynchrone Signalen versorgt, die auf zwei Zähler aufgeschaltet werden. Die Zählerausgänge sind mit einem Multiplexer und ein NAND derart verknüpft, dass ein Gaswechselventil, das für den vorliegenden Kurbelwellenwinkel angesteuert werden muss, ein Ansteuersignal erhält.

Aufgabe der Erfindung ist es unter Beibehaltung einer individuellen Betätigung der Gaswechselventile untereinander den für die Betätigung der Magnetventile erforderlichen Verdrahtungs-, Rechen- und Steuerungsaufwand zu reduzieren.

Diese Aufgabe wird durch erfindungsgemäße Verfahren und Vorrichtungen gelöst.

Die Erfindung betrifft ein Verfahren zum Ansteuern von Gaswechselventilen zugeordneten Magnetventilen bei einer elektrohydraulischen Ventilbetätigung einer Brennkraftmaschine mit mehreren Brennkammern. Die den Gaswechselventilen zugeordneten Magnetventile sind unabhängig voneinander betätigbar. Hierzu werden in einer Steuereinheit kurbelwellensynchrone Ansteuersignale für Magnetventile der Brennkraftmaschine ermittelt und einer Endstufe übermittelt. Die Endstufe steuert die Magnetventile aufgrund der übermittelten Ansteuersignale an. Dabei weist jede Brennkammer der Brennkraftmaschine als Gaswechselventil jeweils wenigstens ein Einlassventil und wenigstens ein Auslassventil auf. Gemäß der Erfindung bilden alle Magnetventile aller Gaswechselventile einer Brennkammer einen Magnetventilsatz. Für alle Magnetventile eines Magnetventilsatzes wird jeweils ein Betätigungsprofil vorgegeben. In der Steuereinheit wird für jede Brennkammer ein kurbelwellensynchrones Aktivierungssignal ermittelt und der Endstufe zuführt. Die Endstufe steuert die Magnetventile des Magnetventilsatzes aufgrund des Aktivierungssignals der Zylinder entsprechend dem für das entsprechende Magnetventil abgespeicherten Betätigungsprofils an.

Diese Vorgehensweise beruht darauf, dass zwar zwischen den Magnetventilen unterschiedlicher Gaswechselventile einer Brennkammer große Unterschiede bestehen können, die Betätigung aller Magnetventile jedoch einem Grundmuster folgt, wobei zwischen einander entsprechenden Magnetventilen unterschiedlicher Brennkammern keine große Varianz gegeben ist. Es wird daher in der Steuereinheit zunächst einmal ein Betätigungsprofil für jedes Magnetventil eines Magnetventilsatzes gebildet. Diese Ermitteln und das Übertragen dieser Information muss zwar rasch, aber nicht kurbelwellensynchron durchgeführt werden. Die Ansteuerung der einzelnen Magnetventile und ihre Synchronisation bezüglich der Kurbelwelle erfolgt über das der entsprechenden Brennkammer zugeordnete Aktivierungssignal. Es wird also eine brennkammerindividuelle Synchronisation sichergestellt, während der Verlauf der Magnetventilbetätigungen einander entsprechender Magnetventile der unterschiedlichen Brennkammern einander entspricht.

Durch die laufende Neuberechnung der Betätigungsprofile für den Magnetventilsatz ist eine rasche, laufende Anpassung der Magnetventilbetätigungszeitpunkte an den aktuellen Fahrzustand und den Fahrwunsch des Fahrers durchführbar. Insgesamt gesehen bleibt die Variabilität und Anpassbarkeit der Betätigungszeitpunkte und Betätigungsdauern der Gaswechselventile der Brennkraftmaschine erhalten. Dennoch ist das Erfordernis der Synchronisation der Neuberechnung bezüglich der Kurbelwelle nicht mehr gegeben. Die Ansteuerung kann dabei nicht nur lediglich Kurbelwellensynchron sondern auch zugleich zeitsynchron durchgeführt werden.

Gemäß vorteilhafter Ausgestaltung der Erfindung ist vorgesehen, dass für jedes einzelne Magnetventil des Magnetventilsatzes ein spezifisches Betätigungsprofil ermittelt wird. Hierdurch wird eine weitgehende Anpassung der Betätigung der Magnetventile an den Fahrzustand erzielt.

Gemäß vorteilhafter Ausgestaltung der Erfindung besteht das Aktivierungssignal für jeden einzelnen Zylinder aus einem binären Signal, wird im Steuergerät ermittelt und an die Endstufe übermittelt. Das binäre Signal ist ein einfach zu erzeugendes Signal, dessen Informationsgehalt ausreichend groß ist. Es ist weiter vorteilhaft, wenn das Aktivierungssignal für jeden einzelnen Zylinder in einer zylinderspezifischen Aktivierungssignalleitung an die Endstufe übermittelt wird. Hierdurch wird in einfacher weise ein Entkoppeln der Aktivierungssignale der unterschiedlichen Aktivierungssignale voneinander erreicht.

Die Endstufe aktiviert gemäß vorteilhafter Ausgestaltung der Erfindung die Magnetventile eines Zylinders aufgrund des Wechsels des Wertes des Aktivierungssignals dieses Zylinders gemäß dem entsprechenden Betätigungsprofil. Insbesondere in Verbindung mit einem binären Signal kann ein Wechsel vom ersten zum zweiten Wert des Aktivierungssignals eine andere Funktion als ein Wechsel vom zweiten zum ersten Wert des Aktivierungssignals haben. Dabei werden gemäß bevorzugter Ausgestaltung die Einlassventilen zugeordneten Magnetventile aufgrund eines ersten Wertewechsels zwischen zwei Werten des Aktivierungssignals und die den Auslassventilen zugeordneten Magnetventile aufgrund eines vom ersten verschiedenen zweiten Wertewechsels zwischen zwei Werten des Aktivierungssingals erfolgt.

Gemäß bevorzugter Ausgestaltung der Erfindung werden Betätigungsprofile im Steuergerät ermittelt und über eine Datenleitung an die Endstufe übermittelt und dort zur Verwendung bei der Ansteuerung der Magnetventile in einer Speichereinheit abgespeichert. Hierbei werden die in der Speichereinheit der Endstufe abgelegten Betätigungsprofile während des Betriebs der Endstufe durch im Steuergerät vorzugsweise neu ermittelte Werte aktualisiert.

Ein Betätigungsprofil besteht gemäß vorteilhafter Ausgestaltung der Erfindung aus einem Rechteckprofil, das den Beginn und die Dauer der Betätigung des Magnetventils bezüglich dem durch das entsprechende Aktivierungssignal festgelegten Zeitpunkt. Gemäß bevorzugter Ausgestaltung der Erfindung besteht ein Betätigungsprofil aus der Angabe von vier aufeinander folgenden Zeitdauern. Dabei repräsentiert die erste Zeitdauer die Dauer einer Wartezeit, die zweite Zeitdauer die Dauer Anlegens einer Anzugsspannung am Magnetventil, die dritte Zeitdauer, die Dauer einer Freiflugphase und die vierte Zeitdauer die Dauer des Anlegens einer Haltespannung am Magnetventil repräsentiert.

Gemäß bevorzugter Ausgestaltung der Erfindung wird im Steuergerät ein Anpassungssatz ermittelt wird, der eine magnetventilspezifische Anpassung der Werte des Betätigungsprofils für Magnetventile eines Magnetventilsatzes beinhaltet. Die Werte des Anpassungssatzes werden vom Steuergerät an die Endstufe, insbesondere mittels einer von der ersten Datenleitung getrennten zweiten Datenleitung übermittelt. Vorzugsweise wird für jeden Magnetventilsatz jeweils eine Anpassungsgruppe von Anpassungssätzen für alle Magnetventile der Magnetventilgruppe ermittelt. Durch diese Maßnahme wird eine individuelle Magnetventilbetätigung jedes Magnetventil ermöglicht. Auch zwischen den einander entsprechenden Magnetventilen unterschiedlicher Magnetventilsätze können unterschiedliche Betätigungszeiten bezüglich des jeweiligen Betätigungssignals erreicht werden. Somit bleiben die einzelnen Magnetventile voneinander unabhängig. Diese Ausgestaltung der Erfindung vereinigt also den Vorteil des verringerten Rechen und Steuerleitungsaufwand mit den Vorteilen der Unabhängigkeit der Ventilbetätigung. Dies kann insbesondere deshalb ausgenutzt werden, weil die zeitliche Veränderung des Verhaltens einander entsprechender Magnetventile verschiedener Magnetventilgruppen untereinander, beispielsweise bedingt durch eine voneinander abweichende Temperaturentwicklung der Magnetspulen der Magnetventile, relativ langsam erfolgt, während die Veränderung der Betätigungsprofile der Magnetventilsätze aufgrund des Fahrzustandes häufiger und schneller erfolgt.

Gegenstand der Erfindung ist auch eine Schaltungsanordnung zum Ansteuern von Gaswechselventilen zugeordneten Magnetventilen. In einer Steuereinheit werden Ansteuersignale für die Betätigung der Magnetventile ermittelt. Von der Steuereinheit werden übern entsprechende Leitungen Signale an eine Endstufe übermittelt. Durch die Endstufe erfolgt die Ansteuerung der Magnetventile. Erfindungsgemäß handelt es sich bei den Leitungen zwischen Steuereinheit und Endstufe um eine Datenleitung zum Übermitteln von Betätigungsprofilen von Magnetventilen und um Aktivierungssignalleitungen zum kurbelwellensynchronen Aktivieren der Betätigung der Magnetventile von Zylindern aufgrund von Aktivierungssignalen.

Gemäß der Erfindung wird durch das Vorsehen der Aktivierungssignalleitungen und die eine Datenleitung der Verkabelungsaufwand zwischen Steuereinheit und Endstufe erheblich reduziert. Die Zahl der Leitungen wird deshalb verringert, weil über das Signal einer Aktivierungssignalleitung die Endstufe eine Vielzahl von Magnetventilen ansteuern kann, da diese zu Magnetventilgruppen zusammengefasst sind.

Gemäß vorteilhafter Ausgestaltung ist für jeden Zylinder eine Aktivierungssignalleitung zwischen Steuereinheit und Endstufe vorgesehen ist. Gemäß vorteilhafter Weiterbildung einer erfindungsgemäßen Schaltungsanordnung ist eine zweite Datenleitung zum Übermitteln der von Anpassungssätzen vorgesehen. Darüber hinaus ist es auch vorteilhaft, wenn die Endstufe eine Speichereinheit zum Abspeichern wenigstens der Betätigungsprofile der Magnetventilsätze aufweist.

Weiter entspricht es vorteilhaften Ausgestaltungen der Erfindung, wenn in der Endstufe eine Recheneinheit zum Ermitteln der Ansteuersignale aus den Betätigungsprofilen und den Aktivierungssignalen sowie ggf. aus den Anpassungssätzen vorgesehen ist.

Im Übrigen ist die Erfindung auch an Hand des in der Zeichnung dargestellten Ausführungsbeispiels näher erläutert; dabei zeigt:
Figur 1: in schematischer Darstellung eine erfindungsgemäße Schaltungsanordnung;
Figur 2: das Flussdiagramm eines erfindungsgemäßen Verfahrens; und
Figur 3: den zeitlichen Verlauf von Betätigungsprofil und Ansteuersignal.

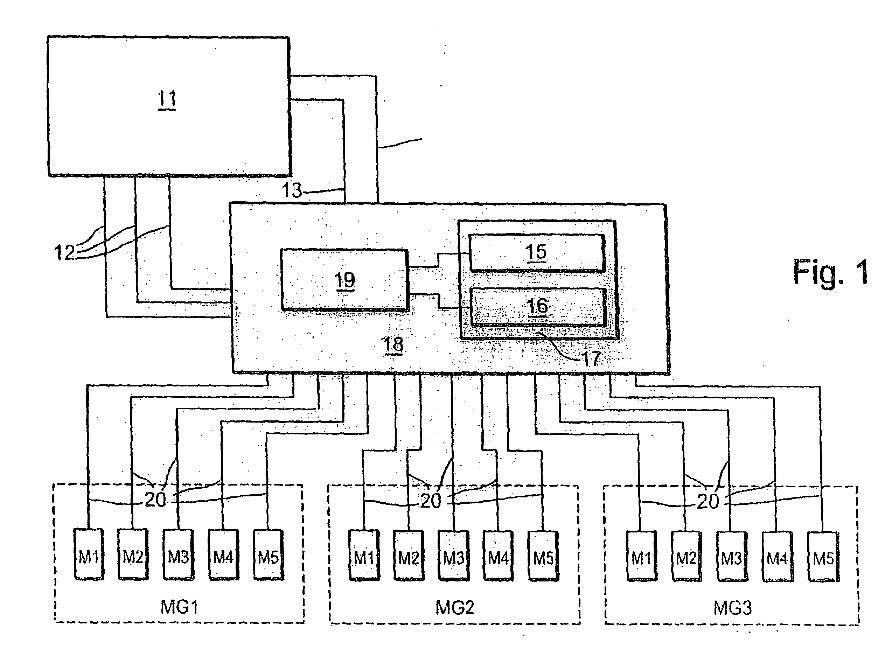

Die Figur 1 zeigt in schematischer Darstellung eine erfindungsgemäße Schaltungsanordnung 10. Die Schaltungsanordnung weist ein Steuergerät 11 auf, in dem die Betätigungsprofile und die Anpassungssätze ermittelt werden. Das Steuergerät ist über mehrere Leitungen 12, 13, 14 mit der Endstufe 18 verbunden. Dabei dient die erste Datenleitung 14 der Übermittlung der Betätigungsprofile, die zweite Datenleitung 13 der Übermittlung der Anpassungssätze. In der Endstufe 18 ist ein Speicher 17 vorgesehen, in dem ein erster Speicher 15 zum Abspeichern der Betätigungsprofile und ein zweiter Speicher 16 zum Abspeichern der Anpassungssätze ausgebildet ist. Daneben sind die Aktivierungssignalleitungen 12 zwischen Steuergerät 11 und Endstufe 18 ausgebildet. Für jede Magnetventilsatz MG1, MG2, MG3 ist dabei jeweils eine Aktivierungssignalleitung 12 ausgebildet.

In der Endstufe 18 dient eine Recheneinheit 19 dem Ermitteln der Ansteuersignale aus den in dem Speicher 17 abgelegten Betätigungsprofilen und den Anpassungssätzen. Aufgrund der über die Aktivierungssignalleitungen 12 übermittelten Aktivierungssignale werden die Ansteuerleitungen 20 bestromt, die jeweils zu einem spezifischen Magnetventil M1,..,M5 einer der Magnetventilsätze MG1,..,MG3 führen. Dabei sind Magnetventile Mi gleicher Nummer der Magnetventilsätze MG1,..,MG3 einander entsprechende Magnetventile, die - ggf. abgesehen von einer Anpassung aufgrund eines Anpassungssatzes - mit dem gleichen Betätigungsprofil ansteuerbar sind.

Die Magnetventile M1,...M5 bilden jeweils einen Magnetventilsatz MG1,..,MG3. In der Figur 1 sind zur Vereinfachung 3 Magnetventilsätze mit jeweils fünf Magnetventilen Mi, i=1,...,5 dargestellt. Die Anzahl der Magnetventile Mi in einem Magnetventilsatz ist jedoch ebenso entsprechend den jeweiligen Verhältnissen anpassbar, wie die Anzahl der Magnetventilsätze.

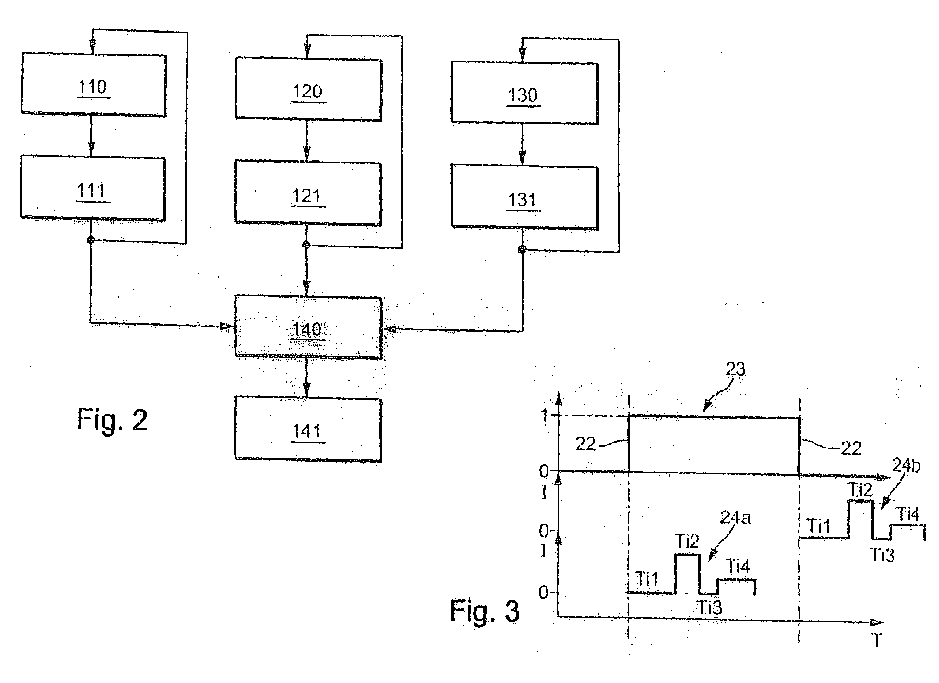

Die Figur 2 zeigt in schematischer Darstellung das Flussdiagramm eines erfindungsgemäßen Verfahrens. Die Schritte 110, 111; 120,121; 130,131 werden dabei in der Steuereinheit ausgeführt und können durchaus parallel zueinander erfolgen. Die Schritte 140 und 141 werden in der Endstufe ausgeführt und erfolgen parallel zu dem Ablauf der in der Steuereinheit ausgeführten Verfahrensschritte.

Gemäß dem Schritt 110 werden die Betätigungsprofile 24a, 24b (Fig. 3) ermittelt und anschließend gemäß dem Schritt 111 über die erste Datenleitung 13 an die Endstufe 18 übermittelt. Gemäß dem Schritt 120 werden die Anpassungssätze ermittelt und gemäß dem Schritt 121 über die zweite Datenleitung 14 an die Endstufe 18 übermittelt. Gemäß dem Schritt 130 werden die Aktivierungssignale 23 synchron zur Kurbelwellendrehung ermittelt. Sie werden dann gemäß dem Schritt 131 über die Aktivierungssignalleitungen 12 an die Endstufe 18 übermittelt.

Gemäß dem Schritt 140 wird in der Endstufe 18 aufgrund der vorliegenden Werte der Anpassungssätze und der Betätigungsprofile die für ein bestimmtes Magnetventil Mi (i=1,...5) eines Magnetventilsatzes MGj (j=1,...,3) die für die Ansteuerung des Magnetventils Mi erforderlichen Werte ermittelt. Ist für einander entsprechende Magnetventile Mi der Magnetventilsätze MG1,..,MG3 ein Betätigungsprofil 24 durch die vier Zahlenwerte Ti1, Ti2, Ti3, Ti4 vorgegeben (siehe Figur 3) und für das Magnetventil Mi der Magnetventilsatzes MGj ein Anpassungssatz durch die vier Werte Aij1, Aij2, Aij3, Aij4 so ergibt sich für dieses Magnetventil ein die Ansteuerung charakterisierender Datensatz D(Mi, MGj) nach der Gleichung D(Mi,MGj)= (Ti 1*Aij1, Ti2*Aij2, Ti2*Aij2, Ti3*Aij3, Ti4*Aij4). Die Werte Aijn mit n=1,...,4 eines Anpassungssatzes sind also Skalierungsfaktioren. Gemäß dem Schritt 141 werden entsprechend dem Eintreffen der Aktivierungssignale 23 die Magnetventile Mi der Magnetventilgruppen MG1,..,MG3 aktiviert. Alternativ zu einer Skalierung mit Faktoren, wie sie hier dargestellt ist, kann der Anpassungssatz auch direkt Korrekturwerte enthalten, die dann durch Addition mit dem Magnetventilsatz verknüpft werden.

Die Figur 3 zeigt den zeitlichen Verlauf eines Aktivierungssignals 23 sowie parallel dazu den Verlauf von zwei Betätigungsprofilen 24a, 24b. Die Betätigungsprofile 24a, 24b sind jeweils einem Magnetventil Mi zugeordnet. Das Magnetventil Mi mit dem Betätigungsprofil 24a ist dabei einem Einlassventil der Brennkraftmaschine zugeordnet, während das Magnetventil Mi mit dem Betätigungsprofil 24b einem Auslassventil der Brennkraftmaschine zugeordnet sind und beide Magnetventile einem Magnetventilsatz MGj angehören. Das Aktivierungssignal 23 wechselt kurbelwellensynchron zum Zeitpunkt der aufsteigenden Flanke 21 seinen Wert, beispielsweise von 0 nach 1. Nach diesem Zeitpunkt werden die Betätigungsprofile 24a der den Einlassventilen zugeordneten Magnetventile Mi bemessen. Das Aktivierungssingal ist von vorgegebener Dauer und wechselt danach wieder seinen Wert. Dies ist durch die abfallende Flanke 22 dargestellt. Nach diesem Zeitpunkt werden die Betätigungsprofile 24b der den Auslassventilen zugeordneten Magnetventile Mi bemessen.

Jedes Betätigungsprofil eines Magnetventils Mi besteht aus vier aufeinander folgenden Zeitabschnitten, Ti1, Ti2, Ti3, Ti4. Die Wartezeit Ti1 gibt an, wie viel Zeit nach der entsprechenden Flanke die Betätigung des Magnetventils Mi beginnt. Für die Anzugsspannungszeit Ti2 wird das Magnetventil Mi mit einem Anzugsstrom bestromt. Anschließend ergibt sich eine Freiflugphase der Dauer Ti3 in der das Magnetventil nicht bestromt wird. Daran schließt sich die Haltezeit Ti4 an, während der das Magnetventil mit Haltestrom bestromt wird.

Durch die Anpassungssätze Aij können die Betätigungsprofile 24a,24b an die individuellen Verhältnisse eines Magnetventils Mi des Magnetventilsatzes MGj angepasst werden. Die Anpassungssätze Aij aller Magnetventile Mi, i=1,...,5 eines Magnetventilsatzes bilden eine Anpassungsgruppe.

## Patentansprüche

1. Verfahren zum Ansteuern von Gaswechselventilen zugeordneten Magnetventilen, bei einer elektrohydraulischen Ventilbetätigung einer Brennkraftmaschine mit mehreren Brennkammern, wobei
- die den Gaswechselventilen zugeordneten Magnetventile unabhängig voneinander betätigbar sind,
- in einem Steuergerät (11) zumindest kurbelwellensynchrone Ansteuersignale für Magnetventile der Brennkraftmaschine ermittelt und einer Endstufe übermittelt werden,
- wobei die Endstufe die Magnetventile aufgrund der übermittelten Ansteuersignale ansteuert, und
- wobei die Gaswechselventile jeder Brennkammer jeweils wenigstens ein Einlassventil und wenigstens ein Auslassventil umfassen
- **dadurch gekennzeichnet, dass**
- alle Magnetventile (Mi) aller Gaswechselventile einer Brennkammer einen Magnetventilsatz (MGj, MG1,MG2,MG3) bilden,
- für alle Magnetventile (Mi) eines Magnetventilsatzes (MGj, MG1,MG2,MG3) ein Betätigungsprofil (24,24a,24b) vorgegeben ist,
- im Steuergerät (11) für jede Brennkammer ein kurbelwellensynchrones Aktivierungssignal (23) ermittelt und der Endstufe (18) zuführt,
- die Endstufe die Magnetventile aufgrund des Aktivierungssignals der Zylinder entsprechend dem für das entsprechende Magnetventil abgespeicherten Betätigungsprofils aktiviert,
- die Betätigungsprofile (24,24a,24b) im Steuergerät (11) ermittelt werden und über eine Datenleitung (13) an die Endstufe (18) übermittelt und dort zur Verwendung bei der Ansteuerung der Magnetventile (Mi) in einem Speicher (17) abgespeichert werden.

2. Verfahren nach Anspruch 1, **dadurch gekennzeichnet, dass** für jedes einzelne Magnetventil (Mi) des Magnetventilsatzes (MGj, MG1,MG2,MG3) ein spezifisches Betätigungsprofil ermittelt wird.

3. Verfahren nach einem der vorhergehenden Ansprüche, **dadurch gekennzeichnet, dass** das Aktivierungssignal (23) für jeden einzelnen Zylinder aus einem binären Signal besteht, wobei das Aktivierungssignal (23) im Steuergerät (12) ermittelt und an die Endstufe übermittelt wird.

4. Verfahren nach Anspruch 3, **dadurch gekennzeichnet, dass** das Aktivierungssignal (23) für jeden einzelnen Zylinder in einer zylinderspezifischen Aktivierungssignalleitung (12) an die Endstufe (18) übermittelt wird.

5. Verfahren nach einem der Ansprüche 3 oder 4, **dadurch gekennzeichnet, dass** die Endstufe (18) Magnetventile (Mi) eines Zylinders aufgrund des Wechsels des Wertes des Aktivierungssignals (23) dieses Zylinders gemäß dem entsprechenden Betätigungsprofil (24,24a,24b) aktiviert, wobei die Einlassventilen zugeordneten Magnetventile (Mi) aufgrund eines ersten Wertewechsels zwischen zwei Werten des Aktivierungssignals (23) und die den Auslassventilen zugeordneten Magnetventile (Mi) aufgrund eines vom ersten verschiedenen zweiten Wertewechsels zwischen zwei Werten des Aktivierungssignals (23) erfolgt.

6. Verfahren nach Anspruch 5, **dadurch gekennzeichnet, dass** die in dem Speicher (17) der Endstufe (18) abgelegten Betätigungsprofile (24,24a,24b) während des Betriebs der Endstufe (18) durch im Steuergerät (11) neu ermittelte Werte aktualisierbar sind.

7. Verfahren nach einem der vorhergehenden Ansprüche, **dadurch gekennzeichnet, dass** ein Betätigungsprofil (24,24a,24b) aus der Angabe von mehreren aufeinander folgenden Zeitdauern (Ti1,Ti2,Ti3,Ti4) besteht.

8. Verfahren nach Anspruch 7, **dadurch gekennzeichnet, dass** das Betätigungsprofil (24,24a,24b) aus der Angabe von vier aufeinander folgenden Zeitdauern (Ti1,Ti2,Ti3,Ti4) besteht, wobei die erste Zeitdauer (Ti1) die Dauer einer Wartezeit, die zweite Zeitdauer (Ti2) die Dauer Anlegens einer Anzugsspannung am Magnetventil (Mi), die dritte Zeitdauer (Ti3) die Dauer einer Freiflugphase und die vierte Zeitdauer (Ti4) die Dauer des Anlegens einer Haltespannung am Magnetventil repräsentiert.

9. Verfahren nach einem der vorhergehenden Ansprüche, **dadurch gekennzeichnet, dass** im Steuergerät (11) für Magnetventile (Mi) ein Anpassungssatz (Aij) ermittelt wird, der eine Anpassung der Werte des Betätigungsprofils (24,24a,24b) beinhaltet, wobei die Werte des Anpassungssatzes (Aij) vom Steuergerät (11) an die Endstufe (18), insbesondere mittels einer zweiten Datenleitung (14) übermittelt werden, wobei vorzugsweise für jeden Magnetventilsatz (MG1,..,MG3) jeweils eine Anpassungsgruppe von Anspaßungssätzen (Aij) für die Magnetventile (Mi) ermittelt wird.

10. Schaltungsanordnung zur Ansteuerung von Gaswechselventilen zugeordneten Magnetventilen, wobei in einem Steuergerät (11) Ansteuersignale für die Betätigung der Magnetventile ermittelt werden, von dem Steuergerät (11) an eine Endstufe über Leitungen Signale übermittelt werden und in der Endstufe die Ansteuerung der Magnetventile erfolgt, insbesondere nach einem der vorhergehenden Ansprüche , **dadurch gekennzeichnet, dass** das Steuergerät (11) Betätigungsprofile (24,24a,24b) ermittelt, dass zwischen Steuergerät (11) und Endstufe (18) eine Datenleitung (13) zum Übermitteln von Betätigungsprofilen (24,24a,24b) von Magnetventilen (Mi) und Aktivierungssignalleitungen (12) zum kurbelwellensynchronen Aktivieren der Betätigung der Magnetventile (Mi) von Zylindern aufgrund von Aktivierungssignalen (23) angeordnet sind, und dass die Endstufe (18) einen Speicher (17) zur Abspeicherung der Betätigungsprofile (24,24a,24b) zur Verwendung bei der Ansteuerung der Magnetventile (Mi) aufweist.

11. Schaltungsanordnung nach Anspruch 10, **dadurch gekennzeichnet, dass** für jeden Zylinder eine Aktivierungssignalleitung (12) zwischen Steuergerät (11) und Endstufe (18) vorgesehen ist.

12. Schaltungsanordnung nach einem der Ansprüche 10 oder 11, **dadurch gekennzeichnet, dass** eine zweite Datenleitung (14) zum Übermitteln der von Anpassungssätzen (Aij) vorgesehen ist.

13. Schaltungsanordnung nach einem der Ansprüche 10 bis 12, **dadurch gekennzeichnet, dass** die Endstufe (18) einen Speicher (17) zum Abspeichern wenigstens der Betätigungsprofile (24,24a,24b) der Magnetventilsätze (MG1,..,MG3) aufweist.

14. Schaltungsanordnung nach einem der Ansprüche 10 bis 13, **dadurch gekennzeichnet, dass** in der Endstufe (18) eine Recheneinheit (19) zum Ermitteln der Ansteuersignale aus den Betätigungsprofilen (24,24a24b) und den Aktivierungssignalen (23) sowie ggf. aus den Anpassungssätzen (Aij) vorgesehen ist.

## Claims

1. Method for actuating solenoid valves which are assigned to gas exchange valves, in an electrohydraulic valve actuating means of an internal combustion engine having a plurality of combustion chambers,
- it being possible for the solenoid valves which are assigned to the gas exchange valves to be actuated independently of one another,
- actuating signals which are at least synchronous with the crankshaft being determined for solenoid valves of the internal combustion engine in a control unit (11) and being transmitted to an output stage,
- the output stage actuating the solenoid valves on the basis of the transmitted actuating signals, and
- the gas exchange valves of each combustion chamber comprising in each case at least one inlet valve and at least one outlet valve,
- **characterized in that**
- all the solenoid valves (Mi) of all the gas exchange valves of a combustion chamber form a solenoid valve group (MGj, MG1, MG2, MG3),
- an actuating profile (24, 24a, 24b) is predefined for all the solenoid valves (Mi) of a solenoid valve group (MGj, MG1, MG2, MG3),
- an activation signal (23) which is synchronous with the crankshaft is determined in the control unit (11) for each combustion chamber and fed to the output stage (18),
- the output stage activates the solenoid valves on the basis of the activation signal of the cylinders in accordance with the actuating profile which is stored for the corresponding solenoid valve,
- the actuating profiles (24, 24a, 24b) are determined in the control unit (11), transmitted to the output stage (18) via a data line (13) and are stored there in a memory (17) for use during the actuation of the solenoid valves (Mi).

2. Method according to Claim 1, **characterized in that** a specific actuating profile is determined for each individual solenoid valve (Mi) of the solenoid valve group (MGj, MG1, MG2, MG3).

3. Method according to one of the preceding claims, **characterized in that** the activation signal (23) for each individual cylinder comprises a binary signal, the activation signal (23) being determined in the control unit (11) and transmitted to the output stage.

4. Method according to Claim 3, **characterized in that** the activation signal (23) for each individual cylinder is transmitted to the output stage (18) in a cylinder-specific activation signal line (12).

5. Method according to either of Claims 3 and 4, **characterized in that** the output stage (18) activates solenoid valves (Mi) of a cylinder on the basis of the change of the value of the activation signal (23) of this cylinder according to the corresponding actuating profile (24, 24a, 24b), the solenoid valves (Mi) which are assigned to inlet valves being actuated on the basis of a first value change between two values of the activation signal (23) and the solenoid valves (Mi) which are assigned to the outlet valves being actuated on the basis of a second value change, which is different from the first, between two values of the activation signal (23).

6. Method according to Claim 5, **characterized in that** the actuating profiles (24, 24a, 24b) which are stored in the memory (17) of the output stage (18) can be updated during operation of the output stage (18) by values which are redetermined in the control unit (11).

7. Method according to one of the preceding claims, **characterized in that** an actuating profile (24, 24a, 24b) comprises the definition of a plurality of time periods (Ti1, Ti2, Ti3, Ti4) which follow one another.

8. Method according to Claim 7, **characterized in that** the actuating profile (24, 24a, 24b) comprises the definition of four time periods (Ti1, Ti2, Ti3, Ti4) which follow one another, the first time period (Ti1) representing the duration of a waiting time, the second time period (Ti2) representing the duration of applying a pick-up voltage to the solenoid valve (Mi), the third time period (Ti3) representing the duration of a free-flight phase and the fourth time period (Ti4) representing the duration of applying a holding voltage to the solenoid valve.

9. Method according to one of the preceding claims, **characterized in that** an adaptation record (Aij) which contains an adaptation of the values of the actuating profile (24, 24a, 24b) is determined in the control unit (11) for solenoid valves (Mi), the values of the adaptation record (Aij) being transmitted by the control unit (11) to the output stage (18), in particular by means of a second data line (14), in each case one adaptation group of adaptation records (Aij) for the solenoid valves (Mi) preferably being determined for each solenoid valve group (MG1, ..., MG3).

10. Circuit arrangement for actuating solenoid valves which are assigned to gas exchange valves, actuating signals for the actuation of the solenoid valves being determined in a control unit (11), signals being transmitted from the control unit (11) to an output stage via lines and the actuation of the solenoid valves taking place in the output stage, in particular according to one of the preceding claims, **characterized in that** the control unit (11) determines actuating profiles (24, 24a, 24b), **in that** a data line (13) is arranged between the control unit (11) and the output stage (18) for transmitting actuating profiles (24, 24a, 24b) of solenoid valves (Mi), and activation signal lines (12) are arranged for the activation synchronously with the crankshaft of the actuation of the solenoid valves (Mi) of cylinders on the basis of activation signals (23), and **in that** the output stage (18) has a memory (17) for storing the actuating profiles (24, 24a, 24b) for use during the actuation of the solenoid valves (Mi).

11. Circuit arrangement according to Claim 10, **characterized in that** an activation signal line (12) is provided between the control unit (11) and the output stage (18) for each cylinder.

12. Circuit arrangement according to either of Claims 10 and 11, **characterized in that** a second data line (14) is provided for transmitting adaptation records (Aij).

13. Circuit arrangement according to one of Claims 10 to 12, **characterized in that** the output stage (18) has a memory (17) for storing at least the actuating profiles (24, 24a, 24b) of the solenoid valve groups (MG1, ..., MG3).

14. Circuit arrangement according to one of Claims 10 to 13, **characterized in that** a computing unit (19) for determining the actuating signals from the actuating profiles (24, 24a, 24b) and the activation signals (23) and optionally from the adaptation records (Aij) is provided in the output stage (18).

## Revendications

1. Procédé de commande d'électrovannes associées à des soupapes d'échange de gaz pour un actionnement électrohydraulique des soupapes d'un moteur à combustion interne comprenant plusieurs chambres de combustion, selon lequel
- les électrovannes associées aux soupapes d'échange de gaz peuvent être actionnées indépendamment les unes des autres,
- dans un appareil de commande (11), au moins des signaux de commande synchronisés avec le vilebrequin sont déterminés pour les électrovannes du moteur à combustion interne et transmis à un étage terminal, et
- l'étage terminal commande les électrovannes suivant les signaux de commande transmis,
- les soupapes d'échange de gaz de chaque chambre de combustion comprenant chacune au moins une soupape d'admission et au moins une soupape d'échappement,
**caractérisé en ce que**
- toutes les électrovannes (Mi) de toutes les soupapes d'échange de gaz d'une chambre de combustion forment un jeu d'électrovannes (MGj, MG1, MG2, MG3),
- un profil d'actionnement (24, 24a, 24b) est prédéfini pour toutes les électrovannes (Mi) d'un jeu d'électrovannes (MGj, MG1, MG2, MG3),
- un signal d'activation (23) synchronisé avec le vilebrequin et transmis à l'étage final (18) est déterminé pour chaque chambre de combustion dans l'appareil de commande (11),
- l'étage final active les électrovannes suite au signal d'activation des cylindres selon le profil d'actionnement enregistré pour l'électrovanne correspondante,
- les profils d'actionnement (24, 24a, 24b) sont déterminés dans l'appareil de commande (11), transmis par une ligne de données (13) à l'étage final (18) puis enregistrés au niveau de celui-ci dans une mémoire (17) pour l'utilisation lors de la commande des électrovannes (Mi).

2. Procédé selon la revendication 1,
**caractérisé en ce qu'**
un profil d'actionnement spécifique est déterminé pour chaque l'électrovanne (Mi) du jeu d'électrovannes (MGj, MG1, MG2, MG3).

3. Procédé selon l'une quelconque des revendications précédentes,
**caractérisé en ce que**
le signal d'activation (23) pour chaque cylindre est un signal binaire, le signal d'activation (23) étant déterminé dans l'appareil de commande (11) et transmis à l'étage final.

4. Procédé selon la revendication 3,
**caractérisé en ce que**
le signal d'activation (23) pour chaque cylindre est transmis à l'étage final (18) par une ligne de signal d'activation (12) spécifique pour chaque cylindre.

5. Procédé selon l'une des revendications 3 ou 4,
**caractérisé en ce que**
l'étage final (18) active des électrovannes (Mi) d'un cylindre suivant le changement de la valeur du signal d'activation (23) de ce cylindre selon le profil d'actionnement (24, 24a, 24b) correspondant, les électrovannes (Mi) associées à des soupapes d'admission étant actionnées suite à un premier changement de valeur entre deux valeurs du signal d'activation (23) et les électrovannes (Mi) associées aux soupapes d'échappement étant actionnées suite à un deuxième changement de valeur différent du premier, entre deux valeurs du signal d'activation (23).

6. Procédé selon la revendication 5,
**caractérisé en ce que**
les profils d'actionnement (24, 24a, 24b) enregistrés dans la mémoire (17) de l'étage final (18) peuvent être mis à jour pendant le fonctionnement de l'étage final (18) par des valeurs nouvelles déterminées dans l'appareil de commande (11).

7. Procédé selon l'une quelconque des revendications précédentes,
**caractérisé en ce qu'**
un profil d'actionnement (24, 24a, 24b) comprend l'indication de plusieurs périodes de temps (Ti1, Ti2, Ti3, Ti4) successives.

8. Procédé selon la revendication 7,
**caractérisé en ce que**
le profil d'actionnement (24, 24a, 24b) comprend l'indication de quatre périodes de temps (Ti1, Ti2, Ti3, Ti4) successives, la première période de temps (Ti1) étant la durée d'un temps d'attente (Ti2), la deuxième période de temps (Ti2) la durée d'application d'une tension de traction sur l'électrovanne (Mi), la troisième période de temps (Ti3) la durée d'une phase de vol libre et la quatrième période de temps (Ti4) la durée d'application d'une tension de maintien sur l'électrovanne.

9. Procédé selon l'une quelconque des revendications précédentes,
**caractérisé en ce qu'**
un jeu d'adaptation (Aij) est déterminé dans l'appareil de commande (11) pour électrovannes (Mi), qui comprend une adaptation des valeurs du profil d'actionnement (24, 24a, 24b), les valeurs du jeu d'adaptation (Aij) étant transmises par l'appareil de commande (11) à l'étage final (18), en particulier au moyen d'une deuxième ligne de données (14), et pour chaque jeu d'électrovannes (MG1, ..., MG3) respectivement un groupe d'adaptation d'ensembles d'adaptation (Aij) est de préférence déterminé pour les électrovannes (Mi).

10. Circuit pour commander des électrovannes associées à des soupapes d'échange de gaz, dans lequel dans un appareil de commande (11) des signaux de commande sont déterminés pour l'actionnement des électrovannes, des signaux sont transmis par l'appareil de commande (11) par des lignes à un étage final, et dans l'étage final s'effectue la commande des électrovannes, en particulier selon l'une quelconque des revendications précédentes,
**caractérisé en ce que**
l'appareil de commande (11) détermine des profils d'actionnement (24, 24a, 24b), avec entre l'appareil de commande (11) et l'étage final (18) une ligne de données (13) pour transmettre des profils d'actionnement (24, 24a, 24b) d'électrovannes (Mi) et des lignes de signal d'activation (12) pour l'activation synchronisée avec le vilebrequin de l'actionnement des électrovannes (Mi) de cylindres suite à des signaux d'activation (23), et l'étage final (18) présente une mémoire (17) pour enregistrer les profils d'actionnement (24, 24a, 24b) utilisées lors de la commande des électrovannes (Mi).

11. Circuit selon la revendication 10,
**caractérisé en ce que**
pour chaque cylindre, une ligne de signal d'activation (12) est prévue entre l'appareil de commande (11) et l'étage final (18).

12. Circuit selon l'une des revendications 10 ou 11,
**caractérisé en ce qu'**
une deuxième ligne de données (14) est prévue pour la transmission de jeux d'adaptation (Aij).

13. Circuit selon l'une des revendications 10 à 12,
**caractérisé en ce que**
l'étage final (18) présente une mémoire (17) pour enregistrer au moins les profils d'actionnement (24, 24a, 24b) des ensembles d'électrovannes (MG1, ..., MG3).

14. Circuit selon l'une des revendications 10 à 13,
**caractérisé en ce qu'**
une unité de calcul (19) est prévue dans l'étage final (18) pour déterminer les signaux de commande à partir des profils d'actionnement (24, 24a, 24b) et des signaux d'activation (23) et le cas échéant des jeux d'adaptations (Aij).
